# EUROPEAN PATENT SPECIFICATION

(11) **EP 2 328 963 B1**
(45) Date of publication and mention of the grant of the patent: **06.04.2016**
(21) Application number: 09782344.7
(22) Date of filing: 28.08.2009
(51) Int. Cl.: C08K 5/134, C08L 65/02

(54) **POLYARYLENE COMPOSITIONS HAVING ENHANCED FLOW PROPERTIES**
POYLARLYENZUSAMMENSETZUNGEN MIT VERBESSERTEN FLIESSEIGENSCHAFTEN
COMPOSITIONS DE POLYARYLÈNE PRÉSENTANT DES PROPRIÉTÉS D'ÉCOULEMENT AMÉLIORÉES

(30) Priority: 29.08.2008 US 92866 P; 29.08.2008 US 92870 P
(43) Date of publication of application: 08.06.2011
(73) Proprietor: Solvay Specialty Polymers USA, LLC., Alpharetta, GA 30005 (US)
(72) Inventor: SRIRAM, Suresh, Alpharetta Georgia 30022 (US); CLARK, Bruce J., Winder Georgia 30680 (US); PLITHIDES, Gregory C., Norcross Georgia 30092 (US)
(74) Representative: Benvenuti, Federica
(86) International application number: PCT/EP2009/061146
(87) International publication number: WO 2010/023282

(56) References cited:
- WO-A-2007/101852
- US-A- 3 384 588
- US-A- 3 926 897
- US-A- 4 184 999
- US-A- 5 686 520

## Description

### BACKGROUND OF THE INVENTION

### FIELD OF THE INVENTION

The invention relates to a polyarylene composition containing an organic substance as a flow modifier and optionally one or more other components. The polyarylene composition has improved processability, advantageous flow properties, improved toughness and/or color properties. The polyarylene composition may further include a sterically hindered phenol. Articles made from the polyarylene compositions are included in the invention.

### DESCRIPTION OF THE RELATED ART

Rigid rod polymers such as polyarylenes and polyphenylenes are often referred to as self-reinforced polymers (SRPs). Polyarylene polymers have the desirable properties of engineering thermoplastics while concurrently offering the advantages of reinforced thermoplastic materials. Self-reinforced polyarylenes may avoid problems associated with surface finish and homogeneity which are often encountered with conventional reinforced polymers. Self-reinforced polyarylenes have relatively rigid polymer backbones which, in some respects, mimic a fibrous reinforcing agent.

Some of the properties of polyarylene materials, e.g., the polyarylene's self-reinforcing properties, are at least partially responsible for desirable physical properties such as high modulus, high tensile strength and good toughness. On the other hand, these properties may make it difficult to process a polyarylene under certain conditions.

Processing includes injection molding, compression molding and/or extrusion molding the polyarylene to form molded parts and/or stock parts. During injection molding, the polyarylene polymer is subjected to high temperatures and high pressures in an atmosphere that may contain oxygen and/or common atmospheric contaminants. During processing the polyarylene is both at high temperature and in molten form. Under such conditions polyarylenes may be susceptible to undesirable discoloration such as yellowing.

The high viscosity of some SRPs (e.g., polyarylenes) leads to the formation of velocity gradients inside molding equipment such as injection molding barrels. A core of the SRP material inside an extruder barrel, e.g., an injection molding barrel, has a tendency to travel at a faster rate of speed down the barrel during the molding process while an outer layer of SRP material surrounding the core has a tendency to drag against the barrel walls. As the SRP is injected into a mold, or extruded through a die, the velocity gradient between core and outer layers can lead to the formation of undesirable surface effects. The resulting molded parts may show surface roughness or otherwise exhibit unacceptable surface aesthetics.

Another aspect of the flow properties of polyarylene compositions is a tendency to undergo undesirable melt fracture. Melt fracture is a phenomenon that is encountered under certain conditions when thermoplastic materials undergo melt processing, e.g., extrusion and/or injection molding. Melt fracture is due to the melt instability caused by differences in velocity between core and outer layers of a polyarylene composition present in an extrusion barrel. Differences in the velocity of travel between the core and outer layers can cause the outer layer to be subject to a longer and more intense heat history which may lead to thermal decomposition and/or color changes in molten polyarylene material. Further, the core and outer layers of polyarylene may have difficulty mixing thereby tending to cause separation (e.g. cavitation) between the core and outer layers.

Especially during extrusion, when a molten polyarylene composition is allowed to flow, the surface of the flowing material may begin to take on a rough, wave-like form. As the flow rate is increased the disruption to surface uniformity increases and the amplitude of the wave-like effect on the surface of the polymer becomes more severe. At sufficiently high flow rates the surface irregularities may disrupt the flow of the molten polymer to such an extent that the molten polymer no longer flows in an even, laminar manner but instead the flow of the molten polymer breaks and the extruded, molten polymer flows in a "spurt-flow" manner.

Melt fracture may severely limit the options for downstream processing of extruded thermoplastic material. Molten polymeric material flowing in a "spurt-flow" manner is not amenable to extrusion through a die. This makes it especially difficult to process polymeric materials by cooling strands of the molten polymer to form a solid filament-like material which can be pelletized. Reducing the tendency of polyarylene compositions to undergo melt fracture would greatly simplify the processing of polyarylene compositions and greatly enhance the throughput of polyarylene composition extrusion processes.

Adding fluorinated polymeric and oligomeric compounds to thermoplastic compositions has served as a way to decrease the tendency of thermoplastic materials to undergo melt fracture. Fluorinated oligomeric and polymeric hydrocarbons such as those obtained by polymerizing fluorinated unsaturated monomers have been added to polyarylene compositions as a way to reduce melt fracture effects. These fluorinated materials do not dissolve in polyarylene polymers and thus their addition to polyarylene compositions causes the polyarylene to loose transparency, take on opaque characteristics and/or provide poor surface characteristics when the polyarylene is later used to manufacture molded parts. The immiscibility of the fluorinated materials in the polyarylene may lead to the formation, e.g., extrusion, of a layered material such as vertically striped pellets. The fluoropolymer stripes may delaminate from the polyarylene and separate from the polyarylene composition to form a non-homogeneous solid. If such material is later used for forming parts undesirable surface aesthetics may occur.

Other polymeric additives such as low density polyethylene (LDPE) have also been added to thermoplastic compositions as a means to reduce melt fracture. As is the case for fluorinated additives, LDPE may be added to polyarylene compositions to improve resistance to melt fracture. However, this improvement comes at a significant cost with regard to the visual appearance, color and transparency properties of the underlying polymeric material.

The inventors have addressed the problems of melt fracture and surface appearance by including certain organic compounds optionally having one or more hydrocarbon chains in polyarylene compositions.

WO 2007/101845, incorporated herein by reference in its entirety, describes flame retardant compositions that contain one or more polyarylenes in combination with other polymers such as polycarbonates. The compositions exemplified in the publication contain polyarylenes in amounts less than 50% by weight.

JP 2005-213325, incorporated herein by reference in its entirety, discloses sulfonic acid-substituted polyarylene compositions that may contain certain phosphorus-based stabilizers.

US 3,644,482, incorporated herein by reference in its entirety, describes the inclusion of phenolic stabilizers in thermoplastic compositions.

### SUMMARY OF THE INVENTION

The subject-matter of the present invention is defined in claims 1-14 on attached.

Once aspect of the invention is a polyarylene composition that includes one or more polyarylene polymers, and at least one organic substance having a molecular weight of from 100 to 1,000g/mol.

Another aspect of the invention is a polyarylene composition that exhibits improved processability.

Another aspect of the invention is a polyarylene composition that has improved processability and contains an organic substance having a hydrocarbon chain of from 8 to 85 carbon atoms in length.

Another aspect of the invention is a polyarylene composition that further contains one or more organic substances having a molecular weight of from 100 to 1,000 g/mol and one or more sterically hindered phenols and exhibits improved toughness and/or color properties.

### BRIEF DESCRIPTION OF THE DRAWINGS

FIG. 1 shows the change in viscosity of a polyarylene composition as the amount of a process aid changes.
FIG. 2 shows the melt flow rate and elongation strength of polyarylene compositions.

### DETAILED DESCRIPTION OF THE PREFERRED EMBODIMENTS

The polyarylene composition of the invention includes an organic substance that functions to improve the melt viscosity (e.g., melt flow rate) and processability (e.g., resistance to melt fracture and ability to provide improved surface finish) properties of polyarylene polymers. The inclusion of the organic substance provides improvements in both melt viscosity and the processability of the polyarylene without substantially negatively affecting the transparency and/or surface characteristics of the polyarylene polymer as observed in molded parts. The organic substance of the polyarylene composition of the invention is preferably a flow modifier.

The term "organic substance" as it is used herein refers to chemical compounds and/or compositions that are synthetically or naturally derived. Naturally derived organic substances and compositions include materials that are refined from naturally occurring living or mineral substances. For example, naturally derived organic substances may be derived from oils obtained from plants. Naturally derived substances may also be obtained from materials that are found in nature such as mineral oils and/or petroleum materials that are not typically thought of being derived from living organisms although such materials may be derived from previously living fossilized organisms. A synthetically derived organic substance and/or composition is one that is chemically altered by changing its inherent chemical structure and/or by refining to remove impurities that otherwise affect the purity of the desired organic substance.

The organic substance has a molecular weight of from 100 to 1,000. In preferable embodiments the organic substance has a molecular weight of from 200 to 900, from 300 to 800, from 400 to 700, or from 500 to 600 g/mol.

The organic substance has from 8 to 85 carbon atoms, preferably from 12 to 65, preferably 14 to 50 carbon atoms, 16 to 40 carbon atoms, 18-36 carbon atoms, or 20-24 carbon atoms. Preferably at least a portion of the carbon atoms are arranged in the form of a hydrocarbon chain. For example, the organic substance may have a functionality such as a phenyl group to which a hydrocarbon chain is bonded. The total number of carbon atoms may be up to 85 thus such a phenyl group-containing organic substance may have a hydrocarbon chain having up to 79 carbon atoms. The organic substance may also have a greater number of carbon atoms in the functionality than in the hydrocarbon chain. For example, the organic substance may have a biphenyl functional group made from 12 carbon atoms. The biphenyl group may be substituted with one or more hydrocarbon chains having less than 12 carbon atoms. Likewise the functional group may be or contain one or more heteroatoms. For example the functional group may be a heteroatom substituted phenyl group such as a phenol, e.g., a phenol having a hydrocarbon chain. Examples include compounds such as nonylphenol.

Organic substances substituted with more than one hydrocarbon chain and having a total number of from 8 to 85 carbon atoms are also included in the polyarylene composition of the invention. Examples of organic substances that may be used in the polyarylene composition of the invention are described below. For organically derived organic substances the hydrocarbon chain preferably has an even number of carbon atoms. Organic substances having one or more hydrocarbon chains containing 9, 11, 13, 15, 17, 19, 21, 23, 25, 27, 29, 31, 33, 35, 37, 39, 41, 43, 45, 47, 49, 51, 53, 55, 57, 59, 61, 63, 65, 67 or 69 carbon atoms are also included in the invention. Of course, hydrocarbon chains having an even number of carbon atoms falling between any of the aforementioned odd numbers are included in the invention. In some embodiments of the invention the organic substance is a mixture of hydrocarbon chains of different length where the number average of carbon atoms per hydrocarbon chain is from 8 to 85, preferably from 12 to 70, 20 to 60, or from 24 to 48.

When the organic substance is a composition that includes a mixture of organic substances having a distribution of hydrocarbon chain lengths, it is acceptable that hydrocarbon chains having less than 8 or more than 85 carbon atoms are included in the polyarylene composition. In other embodiments of the invention hydrocarbon chains having less than 8 or more than 85 carbon atom are excluded from the polyarylene composition.

In other embodiments of the invention, one or more additional additives may be present in the polyarylene composition of the invention where such additional additives include chemical compounds having from 1 to 7 or more than 85 carbon atoms. For example, the polyarylene composition of the invention may include an organic substance having a hydrocarbon chain of from 1 to 7 carbon atoms and, in addition, may include a polymer additive such as an impact modifier that includes a polymeric material having a carbon chain of substantially greater than 85 carbon atoms in length.

In some especially preferred embodiments of the invention the organic substance is a mixture of hydrocarbons having a number average of from 8 to 85 carbon atoms, preferably a number average of from 12 to 76 carbon atoms, from 24 to 36 carbon atoms. For example, the hydrocarbon chain may be a mineral oil that is saturated or unsaturated, linear or branched, aliphatic or aromatic (preferably aliphatic), and which improves the flow properties of the polyarylene composition.

The organic substance is present in the polyarylene composition of the invention in amounts of from 0.1 to 20% by weight. Preferably, the organic substance is present in amounts of 0.2-19 wt.%, 0.3-18 wt.%, 0.4-17 wt.%, 0.5-15 wt.%, 0.6-16 wt.%, 0.7-15 wt.%, 0.8-14 wt.%, 0.9-13 wt.%, 1.0-12 wt.%, 2-11 wt.%, 3-10 wt.%, 4-9 wt.%, 5-8 wt.%, or 6-7 wt.%. Weight percent is based on the total weight of the organic substance in comparison to the total weight of the polyarylene composition. In the aforementioned preferred ranges, all values and subranges between the stated values are expressly included herein as if written out, e.g., the range of 1.0-2.0 % includes 1.1, 1.2, 1.3, 1.4, 1.5, 1.6, 1.7, 1.8, or 1.9 wt.%.

The organic substance preferably has a melting point below 150°C and a boiling point above 150°C, a melting point below 130°C and a boiling point above 100°C, or a melting point below 130°C and a boiling point above 100°C, and preferably comprises at least 8 carbon atoms and at most 85 carbon atoms.

Preferably the polyarylene composition of the invention includes one or more organic substances selected from the group consisting of paraffins, olefins, olefin oligomers, optionally alkoxylated acyclic carboxylic acids, acyclic carboxylic acid esters, acyclic carboxylic acid alkali metal salts, optionally alkoxylated acyclic alcohols and optionally alkoxylated alkyl phenols may be present in the polyarylene composite of the invention.

Non-alkoxylated organic substances, i.e., organic substances having no alkoxy substituents, are preferred over alkoxylated organic substances. The organic substance is preferably free of ethylenic unsaturation, preferably the organic substance contains only fully saturated C-C bonds and no C-C double or triple bonds.

When the organic substance is an acyclic carboxylic acid, it is preferably a monoacid, i.e., an organic compound substituted with only a single acid (-COOH) group.

When the organic substance is an esterified acyclic carboxylic acid, the ester is preferably a monoester made by esterifying an acyclic monoacid. Likewise, when the organic substance is an alcohol it is preferably a monoalcohol, i.e., an alcohol having only a single hydroxyl group.

Especially preferred organic substances include paraffins, olefinic oligomers, non-alkoxylated acyclic carboxylic acids and non-alkoxylated acyclic carboxylic acid esters and mixtures thereof.

Paraffins are alkane hydrocarbons with the general formula CₙH₂ₙ₊₂. The organic substance may be a paraffin wax which is solid at room temperature with a melting point in the range of 40-80°C. Paraffin waxes are generally known to have more than 20 carbon atoms. The organic substance may also be a paraffin that is liquid at room temperature. Such paraffins may have from 8 to 85 carbon atoms. The paraffins may be straight chain, branched, cyclic, acyclic molecules or mixtures thereof. The branched molecules may have comb-type branching, graft type branching, and/or star type branching. In other embodiments the paraffin is has a dendritic structure and/or forms a polymer network. The paraffin may be described in terms of its number average of carbon atoms and/or in terms of its number average molecular weight. The preferred number average molecular weight is from 100 to 1,000 g/mol, preferably from 200 to 800, 300-600, 400-500 g/mol.

The carboxylic acid organic substance of the invention may be an acid-substituted paraffin, preferably having only a single acid group (-COOH). The acid may be in an acid form in which the acid has a hydroxyl group bonded to the carboxy moiety and/or the carboxyl acid may be in an acid form as an ion pair with a cation such as an alkali and/or alkaline earth metal ion such as Li, Na, K, Be, Mg, Ca, and/or Ba.

Examples of carboxylic acids include stearic acid, palmitic acid, lauric acid, capric acid, pelargonic acid, caprylic acid, enanthic acid, myristic acid, pentadecanoic acid, arachidic acid, behenic acid, and lignoceric acid. In some embodiments the organic substance may include one or more unsaturated carboxylic acid, salts thereof or esters thereof such as oleic acid, linoleic acid, and linolenic acid.

Acids and esters of the group of monoacid including stearyl stearate, lauryl stearate, lauryl laurate, are especially preferred.

In another embodiment of the invention the organic substance includes one or more carboxylic diacids. Carboxylic diacids are like carboxylic acids except with two acid groups (-COOH). Carboxylic diacids include hexanedioic acid, heptanedioic acid, octanedioic acid, nonanedioic acid, and decanedioic acid.

The alcohols corresponding to any of the above carboxylic acids may also be present in the organic substance, either as a separate chemical compound or as a substituent of the organic substance such as the alcohol compound reacted with a carboxylic acid to form an ester. Such a corresponding alcohol has the same hydrocarbon backbone as the carboxylic acid but differs from the carboxylic acid in that the acid group (-COOH) is replaced with a hydroxyl group (-OH). If present in reacted form the alcohol moiety may be represented as an alkoxy group (i.e., -OR).

Preferably any alcohol contained in the organic substance is a fatty alcohol, e.g., a hydroxyl substituted aliphatic hydrocarbon. Saturated alcohols are preferred although fatty alcohols containing one or more unsaturations may be included. The fatty alcohol may be one or more of, for example, stearyl alcohol (1-octadecanol), isostearyl alcohol (16-methylheptadecan-1-ol), elaidyl alcohol (9E-octadecen-1-ol), oleyl alcohol (cis-9-octadecen-1-ol), linoleyl alcohol (9Z, 12Z-octadecadien-1-ol) elaidolinoleyl alcohol (9E, 12E-octadecadien-1-ol), linolenyl alcohol (9Z, 12Z, 15Z-octadecatrien-1-ol), elaidolinolenyl alcohol (9E, 12E, 15-E-octadecatrien-1-ol), ricinoleyl alcohol (12-hydroxy-9-octadecen-1-ol), arachidyl alcohol (1-eicosanol), behenyl alcohol (1-docosanol), erucyl alcohol (cis-13-docosen-1-ol), lignoceryl alcohol (1-tetracosanol), ceryl alcohol (1-hexacosanol), montanyl alcohol, cluytyl alcohol (1-octacosanol), myricyl alcohol, melissyl alcohol (1-triacontanol), geddyl alcohol (1-tetratriacontanol) and cetearyl alcohol.

The alcohol may include a phenolic material having a hydroxyl substituted aryl group such as a phenolic group, for example nonylphenol and/or octylphenol.

In one embodiment of the invention the organic substance contains one or more alkoxylated compounds, e.g., an aliphatic compound having one or more alkoxy groups. Preferably the alkoxy group is a group of formula -OR where R is a C₁-C₁₂ alkyl group, preferably R is a C₂-C₁₀ group and/or a C₄-C₁₀ group and/or a C₆-C₈ group. Examples of alkoxylated compounds include of condensates of alkylene oxide with fatty acid, such as condensates of ethylene oxide with lauric acid comprising 5 or comprising 10 mol of ethylene oxide; condensates of alkylene oxide with fatty alcohol, such as condensates of ethylene oxide with lauryl alcohol comprising 2, 4, 7, 10 or 12 mol of ethylene oxide and condensates of propylene oxide with lauryl alcohol comprising 4 or 8 mol of propylene oxide; condensates of alkylene oxide with alkylphenol, such as condensates of ethylene oxide with nonylphenol or condensates of ethylene oxide with octylphenol, and such as condensates of propylene oxide with nonylphenol.

Alkoxylated organic substances suitable for use in the composition of the invention include Disponil^{®} materials that are commercially available from Cognis. Especially preferred are Disponil^{®} products LS 2, 4 and/or 10, which are condensates of ethylene oxide units with lauric acid and/or myristic acid comprising, respectively, 2, 4 or 10 mols of ethylene oxide. Disponil^{®} TA and Disponil^{®} OC products which are a C₁₆/C₁₈ ethoxylated alcohols having polyoxyethylene substituents of different length are preferred. Disponil^{®} OP and Disponil^{®} NP products which are ethoxylated octylphenols and nonylphenols may also be included in the organic substance of the invention.

In a preferred embodiment the organic substance contains one or more ethoxylated fatty acids of general formula R-C(=O)-(OCH₂CH₂)ₙ-OH where R is an aliphatic alkyl group having from 2 to 24 carbon atoms and n is an integer between 1 and 20. Especially preferred are DEPLASTOL^{®} commercial products which are condensates of about 4-5 mol ethylene oxide units with lauric acid and/or myristic acid. DEPLASTOL^{®} materials are available from Cognis. Corresponding propoxylated and/or butylated fatty acids may also be included in the organic substance.

The organic substance may also be an olefin oligomer. "Oligomers" are molecules consisting essentially of a few repeat units derived from one or more monomers. The term "olefin oligomers" or "oligoolefins" is understood to denote oligomers, more than 50 % by weight of the repeat units of which are derived from at least one olefin.

The oligomers included in the compositions according to the present invention have a number average molecular weight ranging from 100 to 1,000.

The olefin may be notably a monoolefin, or a diolefin such as 1,3-butadiene and 1,4-butadiene. It is preferably a monoolefin.

Mention may be made, as examples of monoolefins, of linear monoolefins comprising from 2 to 12 carbon atoms, such as ethylene, propylene, 1-butene, 1-pentene, 1 hexene, 1-heptene, 1-octene, 1-nonene, 1-decene, 1-undecene and 1-dodecene.

The oligoolefins under consideration in the different aspects of the invention can be selected in particular from homooligomers of the above-mentioned monoolefins and from co-oligomers of these olefins, in particular co-oligomers of propylene with one or more comonomers, and from blends of such oligomers. The comonomers can be chosen in particular from the olefins described above such as the linear monoolefin described above, from styrene monomers such as styrene and α-methylstyrene, from ethylenically unsaturated carboxylic acids such as acrylic acid and methacrylic acid, and from ethylenically unsaturated carboxylic acid esters such as methyl acrylate, butyl acrylate and methyl methacrylate. The content by weight of units formed from the comonomers in the oligoolefins is advantageously less than 30 %, preferably less than 10 % by weight and more preferably less than 5 % by weight. It is understood that the term "oligoolefin" is intended equally well to denote the oligomers described above taken in isolation as their blends.

The oligoolefins can in particular be oligo-α-olefins.

The term "oligo-α-olefins" is understood to denote oligomers, more than 50 % by weight of the repeat units of which are derived from at least one α-olefin. The term "α-olefin" is understood to denote an olefin comprising at least 3 carbon atoms. The α-olefin is preferably a monoolefin. It preferably comprises at most 12 carbon atoms. In addition, it is preferably linear.

The oligo-α-olefins under consideration in the different aspects of the invention can be selected from homo-oligomers of an α-olefin and from co-oligomers of an α-olefin with one or more comonomers, and from blends of such oligomers. The comonomers can be chosen in particular from the olefins described above such as the linear monoolefin described above, especially ethylene, from styrene monomers such as styrene and α-methylstyrene, from ethylenically unsaturated carboxylic acids such as acrylic acid and methacrylic acid, and from ethylenically unsaturated carboxylic acid esters such as methyl acrylate, butyl acrylate and methyl methacrylate. The content by weight of units formed from the comonomers in oligo-α-olefins is advantageously less than 30 % by weight, preferably less than 10 % by weight and more preferably less than 5 % by weight. It is understood that the term "oligo-α-olefin" is intended equally well to denote the oligo-α-olefins as described above taken in isolation as their blends.

More particularly, the oligoolefins can be oligopropylenes.

The term "oligopropylenes" is understood to denote oligo-α-olefins, more than 50% by weight of the repeat units of which are derived from propylene.

The oligopropylenes under consideration in the different aspects of the invention can be selected from propylene homo-oligomers and from co-oligomers of propylene with one or more comonomers, and from blends of such oligomers. The comonomers can be chosen in particular from the olefins described above such as the linear monoolefin described above, especially ethylene, from styrene monomers such as styrene and α-methylstyrene, from ethylenically unsaturated carboxylic acids such as acrylic acid and methacrylic acid, and from ethylenically unsaturated carboxylic acid esters such as methyl acrylate, butyl acrylate and methyl methacrylate. The content by weight of units formed from the comonomers in the oligopropylenes is advantageously less than 30 % by weight, preferably less than 10 % by weight and more preferably less than 5 % by weight. It is understood that the term "oligopropylene" is intended equally well to denote the oligopropylenes as described above taken in isolation as their blends.

The oligoolefins are preferably chosen from the group consisting of oligoethylenes and oligopropylenes. More preferably, they are oligoethylenes.

The term "oligoethylenes" is understood to denote oligomers, more than 50 % by weight of the repeat units of which are derived from ethylene.

The oligoethylenes under consideration in the different aspects of the invention can be selected in particular from ethylene homo-oligomers and from co-oligomers of ethylene with one or more comonomers, and also from blends of such oligomers. The comonomers can be chosen in particular from the olefins described above such as the linear monoolefin described above, especially propylene, from styrene monomers such as styrene and α-methylstyrene, from ethylenically unsaturated carboxylic acids such as acrylic acid and methacrylic acid, and from ethylenically unsaturated carboxylic acid esters such as methyl acrylate, butyl acrylate and methyl methacrylate. The content by weight of units formed from the comonomers in the oligoethylenes is advantageously less than 30% by weight, preferably less than 10% by weight, more preferably less than 5% by weight. It is understood that the term "oligoethylene" is intended equally well to denote the oligoethylenes as described above taken in isolation as their blends.

Organic substances suitable for use in the composition of the invention include synthetic AMERILUBE^{®} materials that are commercially available from American Synthol of Marietta, GA, for example Amerilube SFG, Amerilube ATP-FG, Amerilube SGLX-LT-FG, Amerilube SFGL, and/or Amerilube XL165K. Material having a viscosity of from 2-200 cSt @ 40°C are preferred. Even more preferably a viscosity of from 5-150, 10-125, 15-100, 20-90, 25-80, 30-70, 35-60, or 40-50cSt @ 40°C. A viscosity at 100°C of from 2-200 cSt @ 100°C is also preferred. Even more preferably a viscosity of from 5-150, 10-125, 15-100, 20-90, 25-80, 30-70, 35-60, or 40-50cSt @ 100°C.

In preferable embodiments of the invention, the inclusion of 0.1 wt.%, 0.2 wt.%, 0.3 wt.%, or 0.5 wt.% of the organic substance increases the melt flow rate of the polyarylene composition by at least 5%, preferably, 10%, 20%, 30%, 40%, 50%, 60%, 70%, 80%, 90%, or 100% or more. The increase in melt flow rate is in comparison to a polyarylene composition that is the same as that tested but does not contain the organic substance of the invention. Even more preferably, the inclusion of 0.1 wt.%, 0.2 wt.%, 0.3 wt.%, or 0.5 wt.% of the organic substance leads to an increase in melt flow rate as discussed above without diminishing the transparency and/or changing the color properties of the polyarylene composition. For example, the inclusion of at least 0.2 wt.% of the organic substance leads to a substantial increase in melt flow rate while concurrently resulting in a change in color, e.g., yellowness index, of less than 5%. In other embodiments of the invention the inclusion of at least 0.2 wt.% of the organic substance leads to a substantial increase in melt flow rate while concurrently resulting in a change in color, e.g., yellowness index, of less than 40%, 30%, 20%, 10%, or less, most preferably there is no increase in yellowness index when at least 0.2 wt% of the organic substance is included in the polyarylene composition. In some embodiments of the invention the inclusion of 0.2 wt.% of the organic substance decreases yellowness index by 5%, 10%, 15%, 20%, 25% or more.

It is likewise preferable that the inclusion of the organic substance does not have a substantial or measurable undesirable affect on the physical properties of the polyarylene composition. For example, it is preferable that the inclusion of the organic substance does not decrease the tensile strength of the polyarylene composition by more than 25%, preferably by no more than 20%, 15%, 10%, 5%. Even more preferably there is an increase in the tensile strength of the polyarylene composition upon inclusion of the organic substance of the invention. The increase in tensile strength is preferably at least 5%, more preferably at least 10%, 20%, 30%, 40% or 50% or more.

### Phenolic Stabilizer

The polyarylene composition of the invention preferably includes a sterically hindered phenolic stabilizer in addition to the organic substance. The inclusion of a sterically hindered phenolic stabilizer in the polyarylene composition of the invention provides a composition that exhibits not only improved flow properties and processability but also provides significantly superior color consistency and improved color properties.

The weight percent of the sterically hindered phenol stabilizer (HPS) based on the total weight of the composition is generally at least 0.05 wt.%, preferably of at least 0.1 wt.%. Besides, the weight percent of the hindered phenol stabilizer (HPS) based on the total weight of the polymer composition is generally of at most 5 wt.%, and preferably of at most 2.5 wt.%. In some embodiments the hindered phenol stabilizer is present in amounts of at least 0.15 wt.%, at least 0.2 wt.%, at least 0.25 wt.%, at least 0.3 wt.%, at least 0.35 wt.%, at least 0.4 wt.%, at least 0.45 wt.%, at least 0.5 wt.%, at least 0.55 wt.%, at least 0.6 wt.%, at least 0.65 wt.%, at least 0.7 wt.%, at least 0.75 wt.%, at least 0.8 wt.%, at least 0.85 wt.%, at least 0.9 wt.%, at least 0.95 wt.%, at least 1.0 wt.%, at least 2.0 wt.%, at least 3.0 wt.%, or at least 4.0 wt.% and at most 0.2 wt.%, preferably at most 0.25 wt.%, at most 0.3 wt.%, at most 0.35 wt.%, at most 0.4 wt.%, at most 0.45 wt.%, at most 0.5 wt.%, at most 0.55 wt.%, at most 0.6 wt.%, at most 0.65 wt.%, at most 0.7 wt.%, at most 0.75 wt.%, at most 0.8 wt.%, at most 0.85 wt.%, at most 0.9 wt.%, at most 0.95 wt.%, at most 1.0 wt.%, at most 2.0 wt.%, at most 3.0 wt.%, or at most 4.0 wt.%. All values and ranges between the stated values and/or ranges are expressly included as if written out.

Sterically hindered phenol stabilizers are well known to those skilled in the art. The sterically hindered phenolic stabilizer (HPS) contained in the polyarylene composition of the invention is a sterically hindered phenolic stabilizer in the broadest conventional meaning of the term. It can be viewed as any phenol derivative wherein the hydroxy substituent of the phenol cycle is sterically hindered by at least one bulky group fixed to a carbon atom in position ortho to the carbon atom bearing the hydroxy group of the phenol cycle (R_{g}). Advantageously, the hydroxy substituent of the phenol cycle is sterically hindered by at least two bulky groups, at least one first bulky group being fixed to a carbon atom in position ortho to the carbon atom bearing the hydroxy group of the phenol cycle (R_{g}) and at least one other bulky group being fixed either to the other carbon atom in position ortho to the carbon atom bearing the hydroxy group of the phenol cycle (Rₕ), or to the carbon atom in position meta to the carbon atom bearing the hydroxy group and in position para to the first bulky group (Rᵢ). Preferably, the hydroxy substituent of the phenol cycle is sterically hindered by two bulky groups, the first bulky group being fixed to a carbon atom in position ortho to the carbon atom bearing the hydroxy group of the phenol cycle (R_{g}) and the other bulky group being fixed to the other carbon atom in position ortho to the carbon atom bearing the hydroxy group of the phenol cycle (Rₕ). Any bulky group capable of sterically hindering the hydroxy substituent of the phenol cycle is in principle suitable for use as the bulky groups R_{g}, Rₕ and Rᵢ, as long as its chemical nature does not affect detrimentally the properties of the polymer composition.

Bulky groups suitable for use as the bulky groups R_{g}, Rₕ and Rᵢ include advantageously C₁-C₃₀ hydrocarbyls, acyclic C₂-C₃₀ monovalent groups comprising at least one heteroatom (such as -CH₂-OCH₃ and-CH₂-C(=O)OCH₃) and C₀-₃₀ monovalent groups comprising at least one heterocycle such thiophene and pyridine cycles). Non limitative examples thereof include:
C₂-C₃₀ hydrocarbylketones [-C(=O)-R, where R is a hydrocarbyl group], such as C₂-C₃₀ alkylketones (in particular, phenylketone 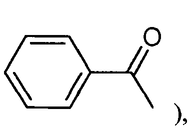 C₇-C₃₀ arylketones, C₈-C₃₀ alkylarylketones and C₈-C₃₀ aralkylketones ;
C₃-C₃₀ hydrocarbyloxyhydrocarbylketones [-C(=O)-R₁-O-R₂, where R₁, is a divalent hydrocarbon group], such as aryloxyarylketones (in particular, phenyloxyphenylketone) ; and
monovalent mono- or polycyclic groups comprising at least one cycle including one or more nitrogen atoms, such as :

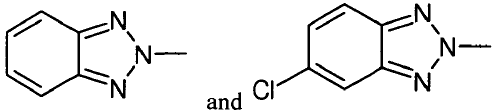

The bulky group R_{g} is advantageously a C₁-C₃₀ hydrocarbyl. Similarly, the bulky group Rₕ, when present, is advantageously a C₁-C₃₀ hydrocarbyl. Similarly, the bulky group Rᵢ, when present, is advantageously a C₁-C₃₀ hydrocarbyl.

As C₁-C₃₀ hydrocarbyl groups suitable for use as the bulky groups R_{g}, Rₕ and Rᵢ, it can be cited:
- C₁-C₃₀ alkyls, such as methyl, ethyl and C₃-C₁₀ alkyls,
- C₆-C₃₀ aryls, such as phenyl,
- C₆-C₃₀ alkylaryls (such as tolyl), and
- C₆-C₃₀ aralkyls, such as -C(CH₃)₂-Phi, where Phi is phenyl.

Preferably, R_{g}, as well as Rₕ and Rᵢ when present, are, independently from each other, C₁-C₃₀ alkyls.

More preferably, they are selected from the group of α-branched alkyl groups of from 3 to 30 carbon atoms and α-branched aralkyl groups of from 6 to 30 carbon atoms. By the term "α-branched alkyl group" is intended one in which the carbon atom of the alkyl group which is bound to a carbon atom of the phenol cycle is also bound to at least two other carbon atoms of the alkyl group. By the term "α-branched aralalkyl group" is intended one in which the carbon atom of the aralalkyl group which is bound to a carbon atom of the phenol cycle is also bound to at least two other carbon atoms of the aralkyl group.

Still more preferably, they are α-branched alkyl groups of from 3 to 10 carbon atoms. Examples thereof include: isopropyl, sec-butyl, tert-butyl, 1-methyl-pentyl and tert-pentyl.

The most preferably, R_{g}, as well as Rₕ and Rᵢ when present, are tert-butyl [-C(CH₃)₃].

Excellent results were obtained when R_{g} was tert-butyl, Rₕ was present and Rₕ was also tert-butyl, and Rᵢ was absent.

Preferred hindered phenol stabilizers (HPS) are selected among the class of alkylated monophenols and the class of esterified hindered phenol substituted acid stabilizers (the latter being disclosed more fully in US-A- 3,285,855 and US-A-3,644,482 (the entire content of each being also expressly incorporated hereinto by way of reference).

Examples of alkylated monophenols are 2,6-di-tert-butyl-4-methylphenol; 2-butyl-4,6-dimethylphenol; 2,6-di-tert-butyl-4-ethylphenol; 2,6-di-tert-butyl-4-n-butylphenol; 2,6-di-tert-butyl-4-isobutylphenol; 2,6-dicyclopentyl-4-methylphenol; 2,6-dioctadecyl-4-methylphenol; 2,4,6-tricyclohexylphenol; 2,6-di-tert-butyl-4-methoxymethylphenol and mixtures thereof.

Examples of esterified hindered phenol substituted acid stabilizers are:
- esters of β-(3,5-di-tert-butyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)- oxalamide and the like;
- esters of β-(5-tert-butyl-4-hydroxy-3-methylphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like;
- esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like;
- esters of 3,5-di-tert-butyl-4-hydroxyphenylacetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)-oxalamide and the like.

Among these hindered phenol stabilizers (HPS), those belonging to the class of esterified hindered phenol substituted acid stabilizers are preferred. Among these, the esters of β-(3,5-di-tert-butyl-4-hydroxyphenyl)propionic acid with polyhydric alcohols are especially preferred. The most preferred hindered phenol stabilizer (HPS) which may be incorporated successfully into the composition of the invention is pentaerythritol tetrakis [3-(3,5-di-t-butyl-4-hydroxyphenyl)propionate] commercially available from Ciba Specialty Chemicals under the trade name Irganox^{®} 1010.

Preferably, the polyarylene composition of the invention has an improved elongation strength of at least 5% in comparison to polyarylene compositions that are the same except do not include the organic substance of the present invention. Preferably, the elongation strength of the polyarylene composition of the invention is increased by at least 5%, 10%, 20%, 30%, 40%, 50%, 60%, 70%, 80%, 90%, 100%, 200%, 300%, 400%, 500% or more in comparison to polyarylene compositions that are the same except do not include the organic substance.

### The polyarylene

For the purpose of the present invention, an arylene group is a hydrocarbon divalent group consisting of one core composed of one benzenic ring or of a plurality of benzenic rings fused together by sharing two or more neighboring ring carbon atoms, and of two ends.

Non limitative examples of arylene groups are phenylenes, naphthylenes, anthrylenes, phenanthrylenes, tetracenylenes, triphenylylenes, pyrenylenes, and perylenylenes. The arylene groups (especially the numbering of the ring carbon atoms) were named in accordance with the recommendations of the CRC Handbook of Chemistry and Physics, 64th edition, pages C1-C44, especially p. C11-C12, incorporated herein by reference.

Arylene groups present usually a certain level of aromaticity; for this reason, they are often reported as "aromatic" groups. The level of aromaticity of the arylene groups depends on the nature of the arylene group; as thoroughly explained in Chem. Rev. 2003, 103, 3449-3605, "Aromaticity of Polycyclic Conjugated Hydrocarbons", the level of aromaticity of a polycyclic aromatic hydrocarbon can be notably quantified by the "index of benzene character" B, as defined on p. 3531 of the same paper; values of B for a large set of polycyclic aromatic hydrocarbon are reported on table 40, same page, incorporated herein by reference.

An end of an arylene group is a free electron of a carbon atom contained in a (or the) benzenic ring of the arylene group, wherein an hydrogen atom linked to said carbon atom has been removed. Each end of an arylene group is capable of forming a linkage with another chemical group. An end of an arylene group, or more precisely the linkage capable of being formed by said end, can be characterized by a direction and by a sense; to the purpose of the present invention, the sense of the end of an arylene group is defined as going from the inside of the core of the arylene group to the outside of said core. As concerns more precisely arylene groups the ends of which have the same direction, such ends can be either of the same or opposite sense ; also, their ends can be in the straight foregoing of each other, or not (otherwise said, they can be disjoint).

A polyarylene is intended to denote a polymer of which more than 50 wt. % of the recurring units are recurring units (R1) of one or more formulae consisting of an optionally substituted arylene group, provided said optionally substituted arylene group is linked by each of its two ends to two other optionally substituted arylene groups via a direct C-C linkage. That the optionally substituted arylene group is linked by each of its two ends to two other optionally substituted arylene groups via a direct C-C linkage, is an essential feature of the recurring units (R1); thus, an arylene recurring unit which is linked by at least one of its two ends to a group other than an arylene group such as phenylene recurring units ϕ₁, ϕ₂ and ϕ_{2'} below:

- O ϕ₁ - S(=O)₂ -,

- O - ϕ₂ - ϕ_{2'} - O -

are not recurring units (R1) in the sense of the present invention.

The arylene groups of which the recurring units (R1) consist can be unsubstituted. Alternatively, they can be substituted by at least one monovalent substituting group. Preferably the arylene units are not substituted with any sulfur-containing group, even more preferably the arylene is not substituted with any sulfonic group.

The monovalent substituting group is usually not polymeric in nature; its molecular weight is preferably below 500, more preferably below 300, still more preferably below 200 and most preferably below 150.

The monovalent substituting group is advantageously a solubilizing group. A solubilizing group is one increasing the solubility of the polyarylene in at least one organic solvent, in particular in at least one of dimethylformamide, N-methylpyrrolidinone, hexamethylphosphoric triamide, benzene, tetrahydrofuran and dimethoxyethane, which can be used as solvents during the synthesis of the polyarylene by a solution polymerization process.

The monovalent substituting group is also advantageously a group which increases the fusibility of the polyarylene, i.e. it lowers its glass transition temperature and its melt viscosity, so as to desirably make the polyarylene suitable for thermoprocessing.

Preferably, the monovalent substituting group is chosen from:
- hydrocarbyls such as alkyls, aryls, alkylaryls and aralkyls;
- halogenos such as -Cl, -Br, -F and -I;
- hydrocarbyl groups partially or completely substituted by at least one halogen atom such as halogenoalkyls, halogenoaryls, halogenoalkylaryls and halogenoaralkyls;
- hydroxyl;
- hydrocarbyl groups substituted by at least one hydroxyl group, such as hydroxyalkyls, hydroxyaryls, hydroxyalkylaryls and hydroxyaralkyls;
- hydrocarbyloxys [-O-R, where R is a hydrocarbyl group], such as alkoxys, aryloxys, alkylaryloxys and aralkyloxys;
- amino (-NH₂);
- hydrocarbyl groups substituted by at least one amino group, such as aminoalkyls and aminoaryls;
- hydrocarbylamines [-NHR or -NR₂, where R is a hydrocarbyl group] such as alkylamines and arylamines;
- carboxylic acids and their metal or ammonium salts, carboxylic acid halides, carboxylic anhydrides;
- hydrocarbyl groups substituted by at least one of carboxylic acids, metals or ammonium salts thereof, carboxylic acid halides and carboxylic anhydrides, such as -R-C(=O)OH where R is an alkyl or an aryl group;
- hydrocarbylesters [-C(=O)OR or -O-C(=O)R, where R is a hydrocarbyl group] such as alkylesters, arylesters, alkylarylesters and aralkylesters;
- amido [-C(=O)NH₂];
- hydrocarbyl groups substituted by at least one amido group;
- hydrocarbylamide monoesters [-C(=O)NHR or -NH-C(=O)-R, where R is a hydrocarbyl group], such as alkylamides, arylamides, alkylarylamides and aralkylamides, and hydrocarbylamide diesters [-C(=O)NR₂ or -N-C(=O)R₂, where R are hydrocarbyl groups], such as dialkylamides and diarylamides;
- sulfinic acid (-SO₂H) sulfonic acid (-SO₃H), their metal or ammonium salts,
- hydrocarbylsulfones [-S(=O)₂-R, where R is the hydrocarbyl group], such as alkylsulfones, arylsulfones, alkylarylsulfones, aralkylsulfones;
- aldehyde [-C(=O)H] and haloformyls [-C(=O)X, wherein X is a halogen atom];
- hydrocarbylketones [-C(=O)-R, where R is a hydrocarbyl group], such as alkylketones, arylketones, alkylarylketones and aralkylketones;
- hydrocarbyloxyhydrocarbylketones [-C(=O)-R¹-O-R², where R¹ is a divalent hydrocarbon group such as an alkylene, an arylene, an alkylarylene or an aralkylene, preferably a C₁-C₁₈ alkylene, a phenylene, a phenylene group substituted by at least one alkyl group, or an alkylene group substituted by at least one phenyl group ; and R² is a hydrocarbyl group, such as an alkyl, aryl, alkylaryl or aralkyl group], such as alkyloxyalkylketones, alkyloxyarylketones, alkyloxyalkylarylketones, alkyloxyaralkylketones, aryloxyalkylketones, aryloxyarylketones, aryloxyalkylarylketones and aryloxyaralkylketones;
- any of the above groups comprising at least one hydrocarbyl group or a divalent hydrocarbon group R¹, wherein said hydrocarbyl group or said R¹ is itself substituted by at least one of the above listed monovalent substituting groups, e.g. an arylketone -C(=O)-R, where R is an aryl group substituted by one hydroxyl group;
where:
- the hydrocarbyl groups contain preferably from 1 and 30 carbon atoms, more preferably from 1 to 12 carbon atoms and still more preferably from 1 to 6 carbon atoms;
- the alkyl groups contain preferably from 1 to 18 carbon atoms, and more preferably from 1 to 6 carbon atoms ; very preferably, they are chosen from methyl, ethyl, n-propyl, isopropyl, n-butyl, isobutyl and tert-butyl;
- the aryl groups are defined as monovalent groups consisting of one end and one core composed of one benzenic ring (such the phenyl group) or of a plurality of benzenic rings directly linked to each other via a carbon-carbon linkage (such as the biphenyl group) or fused together by sharing two or more neighboring ring carbon atoms (such as the naphthyl groups), and wherein the ring carbon atoms are possibly substituted by at least one nitrogen, oxygen or sulfur atom ; preferably, in the aryl groups, no ring carbon atom is substituted;
- the aryl groups contain preferably from 6 to 30 carbon atoms ; more preferably, they are phenyl groups;
- the alkyl group which is contained in the alkylaryl groups meets the preferences of the alkyl groups as above expressed;
- the aryl group which is contained in the aralkyl groups meets the preferences of the aryl groups as above expressed.

More preferably, the monovalent substituting group is chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being unsubstituted or substituted by at least one of the above listed monovalent substituting groups.

Still more preferably, the monovalent substituting group is chosen from arylketones and aryloxyarylketones, said arylketones and aryloxyarylketones being unsubstituted or substituted by at least one of the above listed monovalent substituting groups.

Most preferably, the monovalent substituting group is an (unsubstituted) arylketone, in particular it is phenylketone [-C(=O)-phenyl].

The core of the optionally substituted arylene group of the recurring units (R1) is composed of preferably at most 3, more preferably at most 2, and still more preferably at most one benzenic ring. Then, when the core of the optionally substituted arylene group of the recurring units (R1) is composed of one benzenic ring, the recurring units (R1) are of one or more formulae consisting of an optionally substituted phenylene group, provided said optionally substituted phenylene group is linked by each of its two ends to two other optionally substituted arylene groups via a direct C-C linkage.

As above explained, the optionally substituted arylene group of the recurring units (R1) is linked by each of its two ends to two other optionally substituted arylene groups via a direct C-C linkage. Preferably, it is linked by each of its two ends to two other optionally substituted phenylene groups via a direct C-C linkage.

As also above explained, both ends of the optionally substituted arylene group of the recurring units (R1) can be characterized notably by a direction and by a sense.

A first set of recurring units suitable as recurring units (R1) is composed of optionally substituted arylene groups, the ends of which
- have the same direction,
- are of opposite sense, and
- are in the straight foregoing of each other
[hereafter, rigid rod-forming arylene units (R1-a)].

Non limitative examples of such optionally substituted arylene groups include:

| | |
|---|---|
| 1,4-phenylene (also named p-phenylene) | 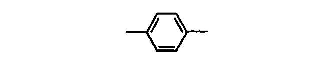 |
| 1,4-naphthylene | 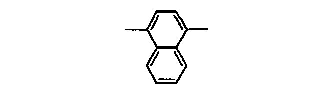 |
| 1,4-phenanthrylene and 2,7-phenanthrylene | 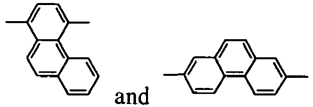 |
| 1,4-anthrylene and 9,10-anthrylene | 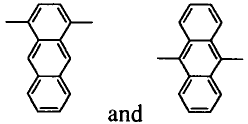 |
| 2,7-pyrenylene | 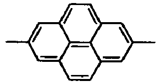 |
| 1,4-naphthacenylene and 5,12-naphthacenylene | 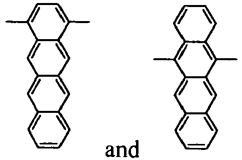 |
| 1,4-chrysenylene | 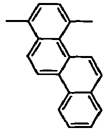 |
| 1,4-triphenylylene and 2,7-triphenylylene | 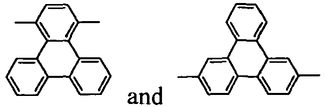 |
| 1,4-pentacenylene, 5,14-pentacenylene and 6,13-pentacenylene | 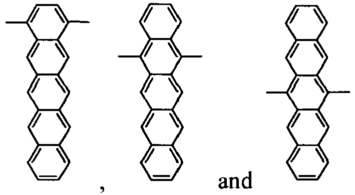 |
| 1,6-coronenylene | 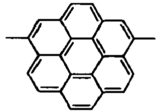 |
| 1,4-trinaphthylenylene, 2,9-trinaphthylenylene and 5,18-trinaphthylenylene | 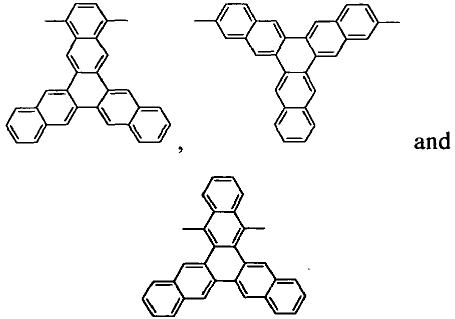 |

and any of these groups substituted by at least one monovalent substituting group, as above defined, in particular by a phenylketone group.

Good results were obtained when recurring units (R1-a) are optionally substituted p-phenylenes.

Recurring units (R1-a), when contained in the polyarylene, result in straight polymer chains exhibiting an outstanding rigidity. For this reason, such a polyarylene is commonly referred to as a "rigid-rod polymer".

A second set of recurring units suitable as recurring (R1) is composed of optionally substituted arylene groups, the ends of which
- either have a different direction, forming thus together an angle between 0 and 180°, said angle being possibly acute or obtuse,
- or have the same direction and the same sense,
- or have the same direction, are of opposite sense and are disjoint (i.e. not in the straight foregoing of each other)
[globally hereafter referred to as kink-forming arylene units (R1-b)].

Then, a first subset of recurring units (R1-b) suitable as recurring units (R1) is composed of optionally substituted arylene groups, the ends of which have a different direction, forming together an acute angle [recurring units (R1-b1)]. Non limitative examples of optionally substituted arylene groups the ends of which have a direction different from each other, include:

| | |
|---|---|
| 1,2-phenylene (or o-phenylene) | 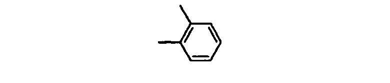 |
| 1,2-, 2,3- and 1,7-naphtylenes | 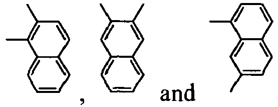 |
| 1,2-, 1,8-, 1,9-, 2,3-, 2,5- and 2,10-phenanthrylenes | 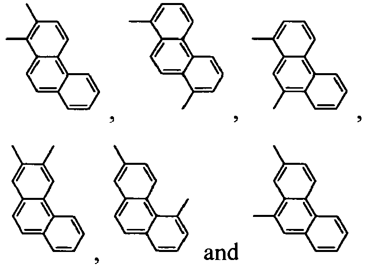 |
| 1,2- and 1,7-anthrylenes | 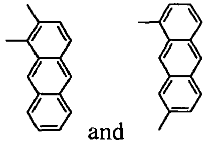 |

and any of these groups substituted by at least one monovalent substituting group, as above defined, in particular by a phenylketone group.

A second subset of recurring units (R1-b) suitable as recurring units (R1) is composed of optionally substituted arylene groups, the ends of which have a different direction, forming together an obtuse angle [recurring units (R1-b2)]. Non limitative examples of optionally substituted arylene groups the ends of which have a direction different from each other, include:

| | |
|---|---|
| 1,3-phenylene (or m-phenylene) | 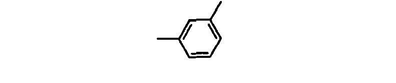 |
| 1,3 - and 1,6-naphtylenes | 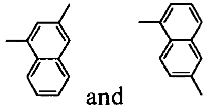 |
| 1,3-, 1,5-, 1,7-, 2,4-, 2,9- and 3,10- phenanthrylenes | 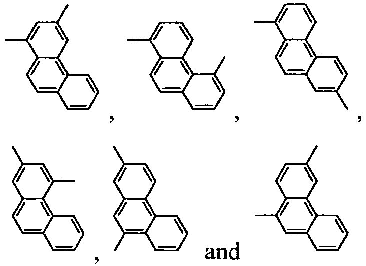 |
| 1,3- and 1,6-anthrylenes | 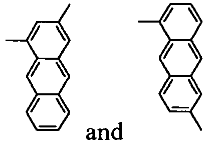 |

and any of these groups substituted by at least one monovalent substituting group, as above defined, in particular by a phenylketone group.

A third subset of recurring units (R1-b) is composed of optionally substituted arylene groups, the ends of which have the same direction and the same sense [recurring units (R1-b3)]. Non limitative examples of optionally substituted arylene groups the ends of which the same direction and the same sense include:

| | |
|---|---|
| 1,8-naphthylene | 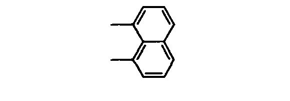 |
| 1,10- and 3,5-phenanthrylenes | 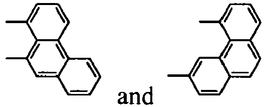 |
| 1,8- and 1,9-anthrylenes | 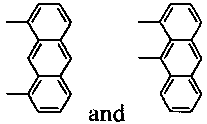 |

and any of these groups substituted by at least one monovalent substituting group, as above defined, in particular by a phenylketone group.

A fourth subset of recurring units (R1-b) is composed of optionally substituted arylene groups, the ends of which have the same direction, are of opposite sense and are disjoint [recurring units (R1-b4)]. Non limitative examples of such optionally substituted arylene groups include:

| | |
|---|---|
| 1,5- and 2,6-naphthylenes | 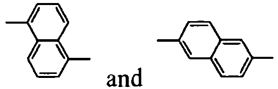 |
| 1,6-, 3,9- and 4,10-phenanthrylenes | 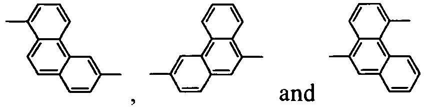 |
| 1,5-, 1,10- and 2,6-anthrylenes | 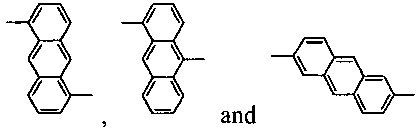 |

and any of these groups substituted by at least one monovalent substituting group, as above defined, in particular by a phenylketone group. Preferably, recurring units (R1-b) are chosen from recurring units (R1-b1), recurring units (R1-b2) and recurring units (R1-b4). More preferably, recurring units (R1-b) are chosen from recurring units (R1-b1) and recurring units (R1-b2). Still more preferably, recurring units (R1-b) are chosen from recurring units (R1-b1). Good results were obtained when recurring units (R1-b) are optionally substituted m-phenylenes.

Recurring units (R1-b), when contained in the polyarylene, result in more or less kinked polymer chains, exhibiting a higher solubility and fusibility than straight polymer chains. For this reason, such a polyarylene is commonly referred to as a "kinked polymer".

Recurring units (R1) are preferably chosen from:
- recurring units (R1-a) which are substituted by at least one monovalent substituting group [choice (A)]; and
- mixes of recurring units (R1-a), which can be substituted or not by at least one monovalent substituting group, with recurring units (R1-b), which can be substituted or not by at least one monovalent substituting group [choice (B)].

Choice (B) is generally more preferred than choice (A).

### Choice (A)

Recurring units of choice (A) are recurring units (R1-a) which are substituted by at least one monovalent substituting group.

Said recurring units are preferably p-phenylenes substituted by at least one monovalent substituting group.

Very preferably, they are p-phenylenes substituted by at least one monovalent substituting group chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being themselves unsubstituted or substituted by at least one monovalent substituting group as those above listed.

Still more preferably, they are p-phenylenes substituted by at least one monovalent substituting group chosen from arylketones and aryloxyarylketones, said arylketones and aryloxyarylketones being unsubstituted or substituted by at least one monovalent substituting group as those above listed.

Most preferably, they are p-phenylenes substituted by an arylketone group, in particular by the phenylketone group.

### Choice (B)

Recurring units of choice (B) are a mix of recurring units (R1-a), which can be substituted or not by at least one monovalent substituting group, with recurring units (R1-b), which can be substituted or not by at least one monovalent substituting group. When such a mix of recurring units is contained in the polyarylene, said polyarylene is commonly referred to as "a kinked rigid-rod polymer".

The recurring units of choice (B) are preferably a mix (MB) of recurring units (R1-a) chosen from optionally substituted p-phenylenes, with recurring units (R1-b) chosen from (i) optionally substituted m-phenylenes and (ii) mixes of optionally substituted m-phenylenes with optionally substituted o-phenylenes.

The recurring units (R1-a) of the mix (MB) are preferably p-phenylene units substituted by at least one substituting group. More preferably, the recurring units (R1-a) of the mix (MB) are p-phenylenes substituted by at least one monovalent substituting group chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being themselves unsubstituted or substituted by at least one monovalent substituting group as those above listed. Still more preferably, the recurring units (R1-a) of the mix (MB) are p-phenylenes substituted by at least one monovalent substituting group chosen from arylketones and aryloxyarylketones, said arylketones and aryloxyarylketones being unsubstituted or substituted by at least one monovalent substituting group as those above listed. Most preferably, they are p-phenylenes substituted by an arylketone group, in particular by the phenylketone group.

Essentially all, if not all, the recurring units (R1-b) of the mix (MB) are m-phenylene units optionally substituted by at least one substituting group. More preferably, essentially all, if not all, the recurring units (R1-b) of the mix (MB) are m-phenylene units which are optionally substituted by at least one monovalent substituting group chosen from hydrocarbylketones [-C(=O)-R, where R is a hydrocarbyl group] and hydrocarbyloxyhydrocarbylketones [-C(=O)-R¹-O-R², where R¹ is a divalent hydrocarbon group and R² is a hydrocarbyl group], said hydrocarbylketones and hydrocarbyloxyhydrocarbylketones being themselves unsubstituted or substituted by at least one monovalent substituting group as those above listed. Still more preferably, essentially all, if not all, the recurring units (R1-b) of the mix (MB) are unsubstituted m-phenylene units. Most preferably, all the recurring units (R1-b) are m-phenylene units.

In the mix (MB), the mole ratio of the recurring units (R1-b), based on the total number of moles of the recurring units (R1-a) and (R1-b), is usually of at least 1 %, preferably at least 5 %, more preferably at least 20 %, still more preferably at least 30 % and most preferably at least 40 %. On the other hand, in the mix (MB), the mole ratio of the recurring units (R1-b), based on the total number of moles of the recurring units (R1-a) and (R1-b), is usually of at most 99 %, preferably at most 95 %, more preferably at most 80 %, still more preferably at most 70 % and most preferably at most 60 %.

Good results were obtained when the recurring units of choice (B) were a mix of p-phenylene substituted by a phenylketone group with unsubstituted m-phenylene, in a mole ratio of about 50:50.

The polyarylene may be notably a homopolymer, a random, alternating or block copolymer.

Optionally, the polyarylene may further comprise recurring units (R1*), different from recurring units (R1).

Recurring units (R1*) may contain or not at least one strong divalent electron withdrawing group linked on each of its ends to an arylene group. Non limitative examples of recurring units (R1*) free of such strong divalent electron withdrawing group are: 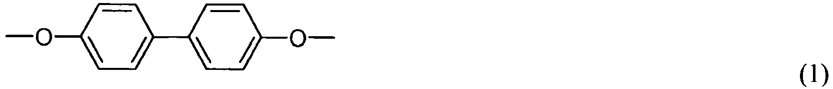 and

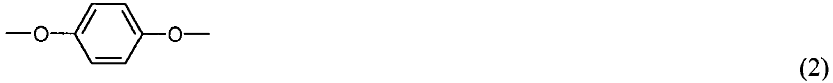

Recurring units (R1*) contain preferably at least one strong divalent electron withdrawing group linked on each of its ends to an arylene group, in particular a p-phenylene group. The divalent electron withdrawing group is preferably chosen from the sulfone group [-S(=O)₂-], the carbonyl group [-C(=O-], the vinylene group [-CH=CH-], the sulfoxide group [-S(=O)-], the azo group [-N=N-], saturated fluorocarbon groups like -C(CF₃)₂-, organic phosphine oxide groups [-P(=O)(=Rₕ)-, where Rₕ is a hydrocarbyl group] and the ethylidene group [-C(=CA₂)- , where A can be hydrogen or halogen]. More preferably, the divalent electron withdrawing group is chosen from the sulfone group and the carbonyl group. Still more preferably, recurring units (R1*) are chosen from :
(i) recurring units of formula 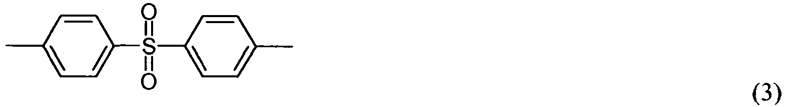
(ii) recurring units of formula 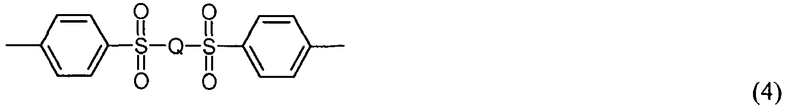 wherein Q is a group chosen from 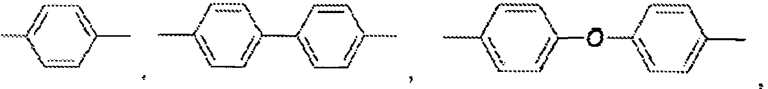 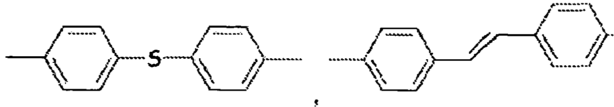 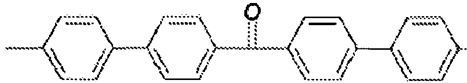 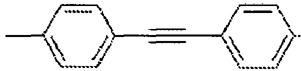 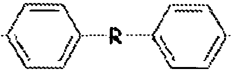 with R being:

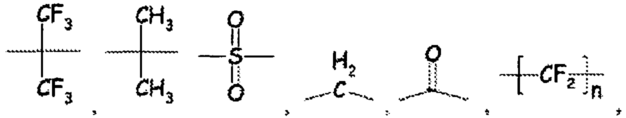

   -(CH₂)_{n'} -,

   with n being an integer from 1 to 6 and n' being an integer from 2 to 6, Q being preferably chosen from 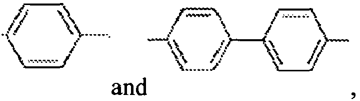
(iii) recurring units of formula 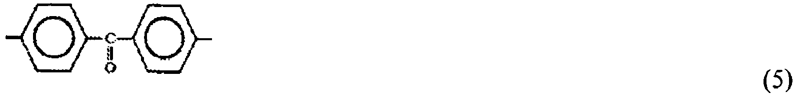
(iv) recurring units of formula 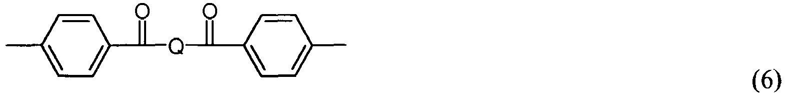 wherein Q is as above defined.

Preferably more than 25 wt. %, more preferably more than 50 wt. %, and still more preferably more than 90 wt. % of the recurring units of the polyarylene are recurring units (R1). Most preferably, essentially all, if not all, the recurring units of the polyarylene are recurring units (R1).

Excellent results were obtained when the polyarylene was a polyphenylene copolymer, essentially all, if not all, the recurring units of which consisted of a mix of p-phenylene substituted by a phenylketone group with unsubstituted m-phenylene in a mole ratio p-phenylene:m-phenylene of from 5:95 to 95:5, preferably of from 70:30 to 30:70, more preferably of from 60:40 to 40:60, and still more preferably of about 50:50. Such a polyphenylene copolymer is commercially available from Solvay Advanced Polymers, L.L.C. as PrimoSpire^{®} PR-250 polyphenylene, formerly known as PARMAX^{®} 1500.

Good results were also obtained when the polyarylene was a kinked rigid-rod polyphenylene copolymer, essentially all, if not all, the recurring units of which consisted of a mix (M1) of p-phenylene substituted by a phenylketone group with unsubstituted m-phenylene in a mole ratio p-phenylene:m-phenylene of from 75:25 to 99.0:1.0, preferably of from 79:21 to 95:5, more preferably of from 82:18 to 90:10, and still more preferably of about 85:15. Such a kinked rigid-rod polyphenylene copolymer is commercially available from Solvay Advanced Polymers, L.L.C. as PrimoSpire^{®} PR-120 polyphenylene, formerly known as PARMAX^{®} 1200.

The polyarylene has usually an absolute weight average molecular weight greater than 1,000, preferably greater than 5,000, more preferably greater than about 10,000 and still more preferably greater than 15,000. On the other hand, the absolute weight average molecular weight of the polyarylene is usually below 100,000, and preferably below 70,000, however in certain cases the polyarylene may have a high absolute weight average molecular weight of from 50,000 to 100,000, preferably from 60,000 to 90,000, or for 70,000 to 80,000. In a certain embodiment, the absolute weight average molecular weight of the polyarylene is above 35,000, preferably between 25,000 and 50,000. In another embodiment, it is at most 35,000; in this embodiment, it is often of at most 25,000 and sometimes of at most 20,000. All values between the stated values are expressly included as if written out, for example, in the range 20,000-25,000, the values 21,000, 22,000, 23,000 and 24,000 absolute weight average molecular weight are expressly included herein. The absolute weight average molecular weight for each of the aforementioned values is determined as described herein.

In one embodiment of the invention the molecular weight of the polyarylene of the polyarylene composition of the invention is an absolute weight average molecular weight in the range of 35,000-50,000, preferably 36,000-49,000, 37,000-48,000, 37,000-48,000, 38,000-47,000, 39,000-46,000, 40,000-45,000, 41,000-44,000, or 42,000-43,000. Polyarylene compositions based on a polyarylene having an absolute weight average molecular weight in the preferred range, 35,000-40,000, provide polyarylene compositions that have substantially improved strength when the polyarylene composition also contains the organic substance and a sterically hindered phenol.

The polyarylene can be amorphous (i.e. it has no melting point) or semicrystalline (i.e. it has a melting point). It is preferably amorphous.

The polyarylene has a glass transition temperature of advantageously above 50°C, preferably above 120°C and more preferably above 150°C.

The polyarylene can be prepared by any method. Methods well known in the art to prepare the polyarylene are described notably in U.S. Patent Nos. 5,227,457; 5,539,048; 5,565,543; 5,646,231; 5,654,392; 5,659,005; 5,668,245; 5,670,564; 5,721,335; 5,756,581; 5,760,131; 5,824,744; 5,827,927; 5,869,592; 5,886,130; and 6,087,467, each of which is incorporated herein by reference in its entirety. A suitable method for preparing the polyarylene comprises polymerizing, preferably by reductive coupling, at least one dihaloarylene molecular compound consisting of one optionally substituted arylene group, which is linked on each of its two ends to one halogen atom, such as chlorine, bromine and iodine. The elimination of both halogen atoms from a dihaloarylene molecular compound results in the formation of an optionally substituted arylene group, suitable as a recurring unit (R1) of the polyarylene.

Thus, for example:
- the elimination of both chlorine atoms from one molecule of p-dichlorobenzene, p-dichlorobiphenyl and their homologous of general formula Cl-(ϕ)_{N}-Cl, N being an integer from 3 to 10, results in the formation of respectively 1, 2 or N adjacent p-phenylene units; thus, p-dichlorobenzene, p-dichlorobiphenyl and their homologous of general formula Cl-(ϕ)_{N}-Cl, N as above defined, can be polymerized, so as to form p-phenylene units;
- 2,5-dichlorobenzophenone (p-dichlorobenzophenone) can be polymerized, so as to form 1,4-(benzoylphenylene) units;
- 2,5-dichloro-4'-phenoxybenzophenone can be polymerized, so as to form 1,4-(4'-phenoxybenzoylphenylene) units;
- m-dichlorobenzene can be polymerized, so as to form m-phenylene units.

The polyarylene composition of the invention may include other additives and modifiers. By way of examples of such usual additives, mention may be made of fibrous reinforcing agents, particulate fillers, antioxidants such as lubricants, fillers, dyes, pigments, nucleating agents such as talc and silica, compatibilizers, curing agents, dyes, flame retardants, tougheners, UV stabilizers, antacids, agents for modifying crystallinity, such as copolymers of ethylene and of n-butyl acrylate or ethyl acrylate, metal-deactivating agents, antioxidants, adhesion promoters and antistatic agents.

Preferably such additives are present in an amount of less than 50% by weight based on the total weight of the polyarylene composition. Even more preferably such additives are present in amounts of less than 40%, 30%, 20%, 10%, 5%, or less than 1% by weight.

The polyarylene is present in an amount of at least 50% by weight of the total weight of the polyarylene composition of the invention. More preferably the polyarylene is present in an amount of at least 60%, 70%, 80%, 90% or at least 95% by weight based on the total weight of the composition.

In other embodiments of the invention the polyarylene composition comprises one or more additional thermoplastic polymers. For example the polyarylene composition of the invention may include any one or more of a polycarbonate, a polyphenylsulfone, a bisphenol A polysulfone, a polyethersulfone, a polyetherethersulfone, a polyetheretherketone and/or a polyetherimide, such as, for example, Radel^{®} R, Radel^{®} A, Ultem^{®}, Udel^{®}, KETASPIRE^{®}, AVASPIRE^{®} and/or Makrolon® polymers. Such blends of the polyarylene composition of the invention and one or more additional thermoplastic polymers may contain the polyarylene as a major (e.g., more than 50 wt%) or minor (e.g., less than 50 wt%) amount. The blends may contain the polyarylene composition in an amount of 5 wt%, 10 wt%, 20 wt%, 30 wt%, 40 wt%, 50 wt%, 60 wt%, 70 wt%, 80 wt%, 90 wt% or 95 wt% based on the total weight of the blend.

Another aspect of the present invention is related to articles comprising at least one part comprising the invented polyarylene composition that includes one or more polyarylenes and at least one organic substance having a molecular weight of from 100 to 1,000g/mol and optionally one or more sterically hindered phenolic stabilizers (HPS). Such article may be made by various methods known in the art. For example, it may be made by extrusion, injection molding, compression molding, injection compression molding, intrusion, fused deposition modeling or selective laser sintering or other techniques known to those skilled in the art. The invented composition is especially well suited for the manufacture of a wide range of articles, and in particular of films, fibers, rods, sheets, slabs, coatings, membranes, cables, tubes and foams.

### EXAMPLES

Mechanical properties were tested for all formulations using 0.125 inch thick ASTM test specimens using the following ASTM methods and 0.125 in thick injection molded specimens:

Tensile properties were measured according to ASTM D-638.

Flexural properties were measured according to ASTM D-790.

Izod impact resistance (notched) was measured according to ASTM D-256.

Izod impact resistance (no notch) was measured according to ASTM D-4812.

Heat deflection temperature at an applied stress of 264 psi was measured according to ASTM D-648.

Yellowness index was measured according to ASTM D-1925.

Melt flow rate was measured at 380°C with a five kilogram weight according to ASTM D-1238.

Tensile strength was measured according to ASTM D-638.

Nominal strain at break was measured according to ASTM D-638.

Modulus was measured according to ASTM D-790.

VR₄₀ was measured from a capillary rheometer at 380°C and calculated as the ratio of the viscosity of the material at 40 minutes over the viscosity of the material at 10 min at 380°C.

Melt viscosity (Pa·s) was measured from a capillary rheometer at 380°C.

Absolute weight average molecular weights (M_{w}) and intrinsic viscosities (IV) were measured at 65°C on a Viscotek TDA 302 triple detector array in line with a GPC system using NMP/0.5% LiBr as the eluent with Viscotek I-series columns (I-guard, IMBLMW-1078 (up to 2x104 PS), and I-MBHMW-3078 (up to 106 g/mol PS) in series). The refractive index increment of the polyarylene in this eluent, dn/dc = 0.240, was used for all calculations.

The physical properties and processability of a polyarylene composition containing the organic substance were compared with the physical properties and processability of polyarylene compositions containing conventional flow modifiers such as fluorinated hydrocarbons and/or LDPE. The polyarylene used for the testing was a material having a molecular weight ranging from 36,000-40,000 Daltons and containing polymerized units derived from dichlorobenzene and dichlorobenzophenone (commercially available from Solvay Advanced Polymer, L.L.C. as PrimoSpire^{®} PR-250). The polyarylene compositions were obtained by mixing the polyarylene with one or more of the additives shown in Table 1 below and subsequently melt extruding the mixture to form pellets of a polyarylene composition. The solid pelleted compositions were then tested according to the above-noted ASTM testing procedures.

**Table 1**

| **PrimoSpire^{®} PR-250 with additives** | **YI** | **MFR @ 380°C 5 Kg** | **Tensile Strength (psi)** | **Nominal Strain @ Break (%)** | **Modulus (kpsi)** | **VR₄₀** |
|---|---|---|---|---|---|---|
| No additive (control) | 275 | 3 | 22000 | 6 | 800 | 1.1 |
| 0.5wt% Irganox^{®} 1010 w/ 0.25wt% LDPE | 161 | 3.32 | 21800 | 11 | 794 | 1.09 |
| 0.5wt% Irganox^{®} 1010 w/ 0.15wt% LDPE | 143 | 3.5 | 21900 | 12.4 | 790 | 1.04 |
| 0.5wt% Irganox^{®} 1010 w/ 0.2wt% MFA | 132 | 3.4 | 22000 | 12.2 | 816 | 1.1 |
| 0.5wt% Irganox^{®} 1010 w/ 0.1wt% MFA | 123 | 3.56 | 22300 | 13 | 792 | 1.1 |
| 0.25wt% Irganox^{®} 1010 & 0.25wt% Irgafos^{®} 168 | 137 | 3.1 | 22400 | 13.1 | 787 | 1.08 |
| 0.15wt% Irganox^{®} 1010 & 0.15wt% Irgafos^{®} 168 | 122 | 2.93 | 22100 | 16 | 794 | 1.1 |
| 0.25wt% Irganox^{®} 1010 & 0.25wt% Irgafos^{®} 12 | 181 | 3.01 | 22200 | 14.5 | 805 | 1.1 |
| 0.1wt% Irganox^{®} 1010 & 0.1wt% Irgafos^{®} 12 | 162 | 2.76 | 22200 | 14.2 | 797 | 1.08 |
| 0.5wt% Irganox^{®} 1010 w/ 0.5 % Stearic Acid | 130 | 13.34 | 21800 | 9.65 | 799 | 1.13 |
| 0.5wt% Irganox^{®} 1010 w/ 0.25wt% Stearic Acid | 124 | 12.1 | 22100 | 9.54 | 796 | 1.09 |
| 0.25wt% Irganox^{®} 1010; 0.25wt% Irganox^{®} 168 w/ 0.1wt% Stearic Acid | 152 | 11.38 | 22100 | 14.1 | 813 | 1.08 |
| 0.25wt% Irganox^{®} 1010; 0.25wt% Irganox^{®} 168 w/ 0.1wt% LDPE | 191 | 10.02 | 22000 | 18 | 806 | 1.11 |
| 0.15wt% Irgafos^{®} 12 & 0.1wt% Irganox^{®} MD 2014 | 242 | 7.28 | 21800 | 11.1 | 812 | 1.12 |
| 0.25wt% Irganox^{®} 1010; 0.25wt% Irganox^{®} 168 w/ 0.1 wt% PFA | 238 | 8.39 | 22100 | 12.1 | 802 | 1.09 |

| | | | | | | |
|---|---|---|---|---|---|---|
| Irganox^{®} 168 = tris(2,4-di-tert-butylphenyl) phosphite; Irganox^{®} MD2014 = 1,2-bis(3,5-di-tert-butyl-4-hydroxyhydrocinnamoyl)hydrazine; PFA = ethylene-tetrafluoro ethylene copolymer oligomer; Irgafos^{®} 12 = 2-[[2,4,8,10-Tetrakis(1,1-dimethylethyl)dibenzo[d,f][1,3,2]dioxaphosphepin- 6-yl]oxy]-N,N-bis[2-[[2,4,8,10-tetrakis(1,1-dimethylethyl)dibenzo[d,f][1,3,2]dioxaphosphepin-6-yl]oxy]-ethyl]ethanamine; Irganox^{®} 1010 = pentaerythritol tetrakis [3-(3,5-di-t-butyl-4-hydroxyphenyl)propionate]; LDPE = low density polyethylene. | | | | | | |

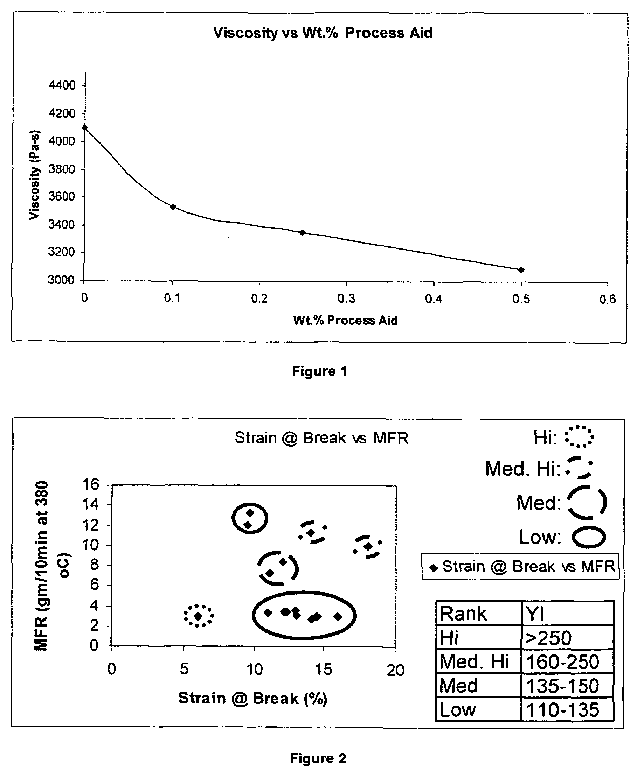

The melt viscosity of the polyarylene composition was determined as a function of the amount of the organic substance. Results for the testing are shown in Figure 1. A substantial decrease in melt viscosity is observed upon the addition of at least 0.1 wt.% of the organic substance. The testing shown in Figure 1 was carried out on a polyarylene composition containing a PrimoSpire^{®} PR 250 polyarylene and from 0.05to 0.5wt.% of an organic substance (an purified mineral oil containing a mixture of hydrocarbon chains ranging from 18 to 30 carbon atoms in chain length). The same effect on viscosity was observed when the same amounts of stearic acid were used in place of the mineral oil.

The substantial decrease in the viscosity of the polyarylene caused by the inclusion of only 0.1wt.% of the organic substance (e.g., a mineral oil including C₁₈-₃₀ hydrocarbon chains or stearic acid) without degradation of the color and/or transparency properties of the polyarylene compositions is surprising.

A polyarylene composition containing the organic substance of the invention and a sterically hindered phenolic stabilizer was prepared. The inclusion of both the organic substance and the sterically hindered phenol provided a polyarylene composition having substantially improved properties in both strength and color. Figure 2 shows how polyarylene compositions containing both the organic substance of the invention and a sterically hindered phenol provided improved melt flow rate, relatively low yellowness index and high elongation (e.g., strain at break in percent). The polyarylene compositions were made by mixing PrimoSpire^{®} PR-250 with a purified mineral oil containing a mixture of hydrocarbon chains of from 18 to 30 carbon atoms in chain length and Irganox^{®} 1010.

In further testing polyarylene compositions that included 0.5 wt.% of the sterically hindered phenol (i.e., Irganox^{®} 1010) and 0.5 wt.% stearic acid as the organic substance were tested for strength/elongation as measured by nominal strain at break. At higher molecular weights the polyarylene composition provided substantially longer elongation strength and less brittleness as shown by a tendency to form ductile breaks.

Similar strength testing was carried out on polyarylene compositions that contained a sterically hindered phenol 0.5wt.% of Irganox 1010^{®} and the organic substance of the present invention. The inclusion of the organic substance and sterically hindered phenol in polyarylene compositions that include a polyarylene having an absolute weight average molecular weight in the preferred range (e.g., 35,000-50,000), provide compositions that exhibit substantially improved elongation strength. Thus, the inclusion of the organic substance and the sterically hindered phenol in polyarylene compositions that contain polyarylenes of relatively higher molecular weight increases the strength of the polyarylene composition.

Obviously, numerous modifications and variations of the present invention are possible in light of the above teachings. It is therefore to be understood that within the scope of the appended claims, the invention may be practiced otherwise than as specifically described herein.

## Claims

1. A polyarylene composition, comprising:
at least 50% by weight of one or more polyarylene polymers, based on the total weight of the polyarylene composition, and
0,1 to 20 % by weight of at least one organic substance having a molecular weight of from 100 to 1,000g/mol, based on the total weight of the polyarylene composition,
wherein said organic substance is selected from the group consisting of a paraffin, an olefin, an olefin oligomer, an acyclic carboxylic acid, an acyclic carboxylic acid ester, and an acyclic carboxylic acid alkali metal salt,
and wherein more than 50 wt.% of the recurring units of said polyarylene polymers are recurring units (R1) of one or more formulae consisting of an optionally substituted arylene group, said optionally substituted arylene group being linked by each of its two ends to two other optionally substituted arylene groups via a direct C-C linkage.

2. The polyarylene composition of Claim 1, wherein the organic substance has a hydrocarbon chain of from 12 to 65 carbon atoms in length.

3. The polyarylene composition of Claim 1 or 2, wherein the organic substance has from 16 to 40 carbon atoms.

4. The polyarylene composition of any one of claims 1 to 3, wherein the organic substance is selected from the group consisting of an acyclic carboxylic acid, an acyclic carboxylic acid ester and an acyclic carboxylic acid alkali metal salt.

5. The polyarylene composition of Claim 4, wherein the organic substance is an acyclic carboxylic acid that is a monoacid.

6. The polyarylene composition of Claim 4, wherein the organic substance is selected from the group consisting of stearic acid, palmitic acid, lauric acid, capric acid, pelargonic acid, caprylic acid, enanthic acid, myristic acid, pentadecanoic acid, arachidic acid, behenic acid, lignoceric acid, oleic acid, linoleic acid, linolenic acid, hexanedioic acid, heptanedioic acid, octanedioic acid, nonanedioic acid, and decanedioic acid.

7. The polyarylene composition of any one of claims 1 to 3, wherein the organic substance is selected from the group consisting of a paraffin, an olefin and an olefin oligomer.

8. The polyarylene composition of claim 7, wherein the organic substance is a mixture of hydrocarbon chains of different length where the number average of carbon atoms per hydrocarbon chain is from 20 to 60.

9. The polyarylene composition of claim 7, wherein the organic substance is a purified mineral oil containing a mixture of hydrocarbon chains ranging from 18 to 30 carbon atoms in chain length.

10. The polyarylene composition of any one of the preceding Claims, having a melt flow rate that it is at least 50 % greater than a comparative composition that is the same as the polyarylene composition without the organic substance.

11. The polyarylene composition of any one of the preceding Claims,
said recurring units (R1) being a mix (MB) of recurring units (R1-a) chosen from optionally substituted p-phenylenes, with recurring units (R1-b) chosen from (i) optionally substituted m-phenylenes and (ii) mixes of optionally substituted m-phenylenes with optionally substituted o-phenylenes.

12. The polyarylene composition of any one of the preceding Claims, wherein the polyarylene is present in an amount of at least 90 % by weight based on the total weight of the composition.

13. The polyarylene composition of any one of the preceding Claims, further comprising at least one sterically hindered phenol stabilizer.

14. An article comprising at least one part comprising the polyarylene composition of any one of the preceding claims.

## Patentansprüche

1. Polyarylenzusammensetzung, umfassend :
mindestens 50 Gew.- % eines oder mehrerer Polyarylen-Polymere, bezogen auf das Gesamtgewicht der Polyarylenzusammensetzung, und
0,1 bis 20 Gew.- % mindestens einer organischen Substanz mit einem Molekulargewicht von 100 bis 1000 g/mol, bezogen auf das Gesamtgewicht der Polyarylenzusammensetzung,
wobei die organische Substanz aus der Gruppe bestehend aus einem Paraffin, einem Olefin, einem Olefin-Oligomer, einer acyclischen Carbonsäure, einem acyclischen Carbonsäureester und einem Alkalimetallsalz einer acyclischen Carbonsäure ausgewählt ist,
und wobei es sich bei mehr als 50 Gew.- % der Wiederholungseinheiten der Polyarylen-Polymere um Wiederholungseinheiten (R1) einer oder mehrerer Formeln, die aus einer gegebenenfalls substituierten Arylengruppe bestehen, handelt, wobei die gegebenenfalls substituierte Arylengruppe durch jedes ihrer beiden Enden über eine direkte C-C-Verknüpfung mit zwei anderen gegebenenfalls substituierten Arylengruppe verknüpft ist.

2. Polyarylenzusammensetzung nach Anspruch 1, wobei die organische Substanz eine Kohlenwasserstoffkette mit einer Länge von 12 bis 65 Kohlenstoffatomen aufweist.

3. Polyarylenzusammensetzung nach Anspruch 1 oder 2, wobei die organische Substanz 16 bis 40 Kohlenstoffatome aufweist.

4. Polyarylenzusammensetzung nach einem der Ansprüche 1 bis 3, wobei die organische Substanz aus der Gruppe bestehend aus einer acyclischen Carbonsäure, einem acyclischen Carbonsäureester und einem Alkalimetallsalz einer acyclischen Carbonsäure ausgewählt ist.

5. Polyarylenzusammensetzung nach Anspruch 4, wobei es sich bei der organischen Substanz um eine acyclische Carbonsäure handelt, bei welcher es sich um eine Monosäure handelt.

6. Polyarylenzusammensetzung nach Anspruch 4, wobei die organische Substanz aus der Gruppe bestehend aus Stearinsäure, Palmitinsäure, Laurinsäure, Caprinsäure, Pelargonsäure, Caprylsäure, Önanthsäure, Myristinsäure, Pentadecansäure, Arachidinsäure, Behensäure, Lignocerinsäure, Ölsäure, Linolsäure, Linolensäure, Hexandisäure, Heptandisäure, Octandisäure, Nonandisäure und Decandisäure ausgewählt ist.

7. Polyarylenzusammensetzung nach einem der Ansprüche 1 bis 3, wobei die organische Substanz aus der Gruppe bestehend aus einem Paraffin, einem Olefin und einem Olefin-Oligomer ausgewählt ist.

8. Polyarylenzusammensetzung nach Anspruch 7, wobei es sich bei der organischen Substanz um ein Gemisch von Kohlenstoffketten unterschiedlicher Länge handelt, wobei das Zahlenmittel der Kohlenstoffatome pro Kohlenwasserstoffkette 20 bis 60 beträgt.

9. Polyarylenzusammensetzung nach Anspruch 7, wobei es sich bei der organischen Substanz um ein gereinigtes Mineralöl handelt, das ein Gemisch von Kohlenwasserstoffketten mit einer Kettenlänge im Bereich von 18 bis 30 Kohlenstoffatomen enthält.

10. Polyarylenzusammensetzung nach einem der vorhergehenden Ansprüche mit einer Schmelzflussrate, die mindestens 50 % größer ist als eine mit der Polyarylenzusammensetzung identische Vergleichszusammensetzung ohne die organische Substanz.

11. Polyarylenzusammensetzung nach einem der vorhergehenden Ansprüche,
wobei es sich bei den Wiederholungseinheiten (R1) um eine Mischung (MB) von Wiederholungseinheiten (R1-a), die aus gegebenenfalls substituierten p-Phenylenen ausgewählt sind, mit Wiederholungseinheiten (R1-b), die aus (i) gegebenenfalls substituierten m-Phenylenen und (ii) Mischungen von gegebenenfalls substituierten m-Phenylenen mit gegebenenfalls substituierten o-Phenylenen ausgewählt sind, handelt.

12. Polyarylenzusammensetzung nach einem der vorhergehenden Ansprüche, wobei das Polyarylen in einer Menge von mindestens 90 Gew.- %, bezogen auf das Gesamtgewicht der Zusammensetzung, vorliegt.

13. Polyarylenzusammensetzung nach einem der vorhergehenden Ansprüche, ferner umfassend mindestens einen sterisch gehinderten Phenol-Stabilisator.

14. Artikel mit mindestens einem Teil, umfassend die Poly-arylenzusammensetzung nach einem der vorhergehenden Ansprüche.

## Revendications

1. Composition de polyarylène, comprenant :
au moins 50 % en masse de
un ou plusieurs polymères de polyarylène, par rapport à la masse totale de la composition de polyarylène, et
0,1 à 20 % en masse de
au moins une substance organique de masse moléculaire comprise entre 100 et 1000 g/mol, par rapport à la masse totale de la composition de polyarylène,
où ladite substance organique est choisie dans le groupe constitué par une paraffine, une oléfine, un oligomère d'oléfine, un acide carboxylique acyclique, un ester d'acide carboxylique acyclique, et un sel de métal alcalin d'acide carboxylique acyclique,
et où plus de 50 % en masse des motifs de répétition desdits polymères de polyarylène sont des motifs de répétition (R1) répondant à une ou plusieurs formules constituées d'un groupement arylène éventuellement substitué, ledit groupement arylène éventuellement substitué étant lié par chacune de ses deux extrémités à deux autres groupements arylène éventuellement substitués via une liaison C-C directe.

2. Composition de polyarylène selon la Revendication 1, où la substance organique comporte une chaîne hydrocarbonée de longueur comprise entre 12 et 65 atomes de carbone.

3. Composition de polyarylène selon la Revendication 1 ou 2, où la substance organique comporte entre 16 et 40 atomes de carbone.

4. Composition de polyarylène selon l'une quelconque des revendications 1 à 3, où la substance organique est choisie dans le groupe constitué par un acide carboxylique acyclique, un ester d'acide carboxylique acyclique et un sel de métal alcalin d'acide carboxylique acyclique.

5. Composition de polyarylène selon la Revendication 4, où la substance organique est un acide carboxylique acyclique qui est un monoacide.

6. Composition de polyarylène selon la Revendication 4, où la substance organique est choisie dans le groupe constitué par les suivantes : acide stéarique, acide palmitique, acide laurique, acide caprique, acide pélargonique, acide caprylique, acide énanthique, acide myristique, acide pentadécanoïque, acide arachidique, acide béhénique, acide lignocérique, acide oléique, acide linoléique, acide linolénique, acide hexanedioïque, acide heptanedioïque, acide octanedioïque, acide nonanedioïque, et acide décanedioïque.

7. Composition de polyarylène selon l'une quelconque des revendications 1 à 3, où la substance organique est choisie dans le groupe constitué par une paraffine, une oléfine et un oligomère d'oléfine.

8. Composition de polyarylène selon la revendication 7, où la substance organique est un mélange de chaînes hydrocarbonées de longueur différente où la moyenne du nombre d'atomes de carbone par chaîne hydrocarbonée est comprise entre 20 et 60.

9. Composition de polyarylène selon la revendication 7, où la substance organique est une huile minérale purifiée contenant un mélange de chaînes hydrocarbonées de longueur de chaîne comprise entre 18 et 30 atomes de carbone.

10. Composition de polyarylène selon l'une quelconque des Revendications précédentes, présentant une fluidité à l'état fondu qui est supérieure d'au moins 50 % à celle d'une composition comparative identique à la composition de polyarylène sans la substance organique.

11. Composition de polyarylène selon l'une quelconque des Revendications précédentes,
lesdits motifs de répétition (R1) étant un mélange (MB) de motifs de répétition (R1-a) choisis parmi les p-phénylènes éventuellement substitués, avec des motifs de répétition (R1-b) choisis parmi (i) les m-phénylènes éventuellement substitués et (ii) des mélanges de m-phénylènes éventuellement substitués avec des o-phénylènes éventuellement substitués.

12. Composition de polyarylène selon l'une quelconque des Revendications précédentes, où le polyarylène est présent à une teneur d'au moins 90 % en masse par rapport à la masse totale de la composition.

13. Composition de polyarylène selon l'une quelconque des Revendications précédentes, comprenant en outre au moins un agent stabilisant de phénol encombré.

14. Article comprenant au moins une partie comprenant la composition de polyarylène selon l'une quelconque des revendications précédentes.
